# EUROPEAN PATENT SPECIFICATION

(11) **EP 4 108 723 B1**
(45) Date of publication and mention of the grant of the patent: **09.09.2026**
(21) Application number: 21767966.1
(22) Date of filing: 05.03.2021
(51) Int. Cl.: C08L 27/18, C08L 71/08, C08K 3/38, C08L 27/12

(54) **RESIN COMPOSITION, MOLDED ARTICLE, AND METHOD FOR PRODUCING MOLDED ARTICLE**
HARZZUSAMMENSETZUNG, FORMKÖRPER UND VERFAHREN ZUR HERSTELLUNG EINES FORMKÖRPERS
COMPOSITION DE RÉSINE, ARTICLE MOULÉ, ET PROCÉDÉ DE FABRICATION DE CELUI-CI

(30) Priority: 10.03.2020 JP 2020040962
(43) Date of publication of application: 28.12.2022
(73) Proprietor: Daikin Industries, Ltd., Osaka-shi, Osaka 530-0001 (JP)
(72) Inventor: MUKAE, Hirofumi, Osaka-Shi, Osaka 530-8323 (JP); KONO, Hideki, Osaka-Shi, Osaka 530-8323 (JP); KOMORI, Masaji, Osaka-Shi, Osaka 530-8323 (JP); NAKAUE, Ayane, Osaka-Shi, Osaka 530-8323 (JP); ITO, Hiroshi, Yamagata-shi, Yamagata 990-8560 (JP)
(74) Representative: Hoffmann Eitle
(86) International application number: PCT/JP2021/008754
(87) International publication number: WO 2021/182336

(56) References cited:
- WO-A1-2014/034493
- WO-A1-2014/171028
- WO-A1-2017/131028
- WO-A1-2019/225694
- WO-A1-2020/045260
- WO-A1-2020/145133
- CN-A- 110 511 533
- CN-A- 110 511 533
- JP-A- 2014 528 492
- JP-A- 2015 110 732
- JP-A- 2015 168 783
- JP-A- 2016 079 391
- JP-A- 2017 116 048
- JP-A- 2017 179 041
- JP-A- 2018 145 325
- JP-A- H10 291 520
- US-A1- 2013 085 220
- US-A1- 2018 051 158

## Description

### TECHNICAL FIELD

The disclosure relates to resin compositions, molded articles, and methods for producing molded articles.

### BACKGROUND ART

JP-A_2018-177931 discloses a resin composition containing a melt-moldable fluororesin and a liquid crystal polymer, wherein the melt-moldable fluororesin has a melting point of 100-325°C and contains at least one functional group selected from a carbonyl group-containing group, a hydroxy group, an epoxy group, and an isocyanate group.

JP-A-2014-528492 discloses a polymeric article containing a melt-fabricable blend of a melt-viscid fluoropolymer and a liquid crystal polymer (LCP), and states that the polymeric article may further contain a filler.

JP-A-2015-110732 discloses a polyphenylene sulfide resin composition containing 99-51 vol.% of a polyphenylene sulfide resin (a) and 1-49 vol.% of a reactive functional group-containing fluororesin (b) relative to 100 vol.% of the total of the components (a) and (b), the component (a) forming a continuous phase (sea phase) and the component (b) forming a dispersed phase (island phase) in morphological observation with an electron microscope, the number average dispersed particle size r1 of the dispersed phase consisting of the component (b) and the number average dispersed particle size r2 of the dispersed phase consisting of the component (b) after melt accumulation at 320°C for 30 minutes giving a ratio r2/r1 of ≤ 1.5. JP-A-2015-110732 states that the resin composition may contain an inorganic filler.

WO 2017/131028 discloses a polyphenylene sulfide resin composition containing a polyphenylene sulfide resin (a), a fluororesin (b), and an organic silane compound (c). When a resin phase-separated structure of a molded article formed from the polyphenylene sulfide resin composition is observed by an electron microscope, the component (a) forms a continuous phase, the component (b) forms a primary dispersed phase having a number average dispersed diameter of not greater than 1 µm, and a secondary dispersed phase of the component (a) is included in the primary dispersed phase of the component (b). WO 2017/131028 states that the resin composition may contain an inorganic filler.

CN-A-110 511 533 describes a composite material containing 60-80% PEEK resin, 10-20% PAVE/TFE copolymer, 5-15% chopped quartz fibre, and 5-15% silane coupler modified boron nitride.

WO 2020/045260 discloses a resin composition containing 35-70 mass% of a fluororesin and 30-65 mass% of boron nitride particles, wherein preferably the boron nitride particles show a ratio (b)/(a) of particles (b) having a particle size of 24.6-29.4 µm to particles (a) having a particle size of 14.6-20.6 µm of ≥ 1.0.

US-A-2018/051158 relates to a polymer composition, comprising 30-60 vol.% of a melt processible fluoropolymer; and 40-70 vol.% boron nitride particles; wherein the boron nitride particles are made from (A) spherical aggregate particles with an average particle diameter of 55-100 µm and an aspect ratio of 1-2 and (B) particles with an average particle diameter of 8 to < 55 µm, with the volume ratio of particles (A) to the total amount of boron nitride being 80-99 vol.%.

### SUMMARY OF INVENTION

### - Technical problem

The disclosure aims to provide a resin composition having high heat dissipation and low relative permittivity while also having excellent moldability.

### - Solution to problem

The disclosure relates to a composition, which is a resin composition comprising:
- a melt-fabricable fluororesin containing at least one functional group selected from OH and carbonyl group-containing groups;
- at least one fluorine-free resin selected from liquid crystal polymers, polyarylene sulfides and aromatic polyether ketones; and
- 30-65 vol.% of particulate boron nitride, which boron nitride has a kurtosis of ≤ 0, determined according to the method defined in the description.

The disclosure also provides a molded article containing the present resin composition.

The disclosure also provides a method for producing a molded article, comprising molding the present resin composition by any of injection molding, extrusion molding, compression molding, cutting, and wire coating extrusion.

Preferred embodiments of the invention are as defined in the appended dependent claims and/or in the following detailed description.

### - Advantageous Effects of Invention

The resin composition of the disclosure (also "the present composition" hereinafter) has high heat dissipation and low relative permittivity while also having excellent moldability.

### DESCRIPTION OF EMBODIMENTS

The present inventors found out that the combined use of a fluororesin and a specific fluorine-free resin can provide a composition having excellent moldability even when a large amount of particulate boron nitride is added for heat dissipation. The inventors thus completed the present composition.

The disclosure is specifically described hereinbelow.

The disclosure relates to a resin composition containing:
- a melt-fabricable fluororesin containing at least one functional group selected from OH and carbonyl group-containing groups;
- at least one fluorine-free resin selected from liquid crystal polymers, polyarylene sulfides and aromatic polyether ketones; and
- 30-65 vol.% of particulate boron nitride, which boron nitride has a kurtosis of ≤ 0, determined according to the method defined in the description.

A conventional fluororesin mixed with a heat dissipation filler such as boron nitride for increased heat dissipation has significantly high melt viscosity. Such a resin causes difficulty in molding, especially in injection molding, which limits processing methods and in turn significantly limits applications of the resin.

The present composition has the above features and thus has excellent heat dissipation and low relative permittivity while also having excellent moldability. Thus, the composition can particularly be subjected to injection molding and can be used for versatile applications. The present composition also has excellent heat resistance.

The fluororesin is a melt-fabricable fluororesin. The term "melt-fabricable" herein means that a polymer can be melted and processed using a conventional processing device such as an extruder or an injection molding machine.

The fluororesin contains at least one functional group selected from a carbonyl group-containing group and hydroxy.

Examples of the carbonyl group-containing group include: a group having a carbonyl group between carbon atoms of a hydrocarbon group; carbonate; carboxy; haloformyl; alkoxycarbonyl; and acid anhydride. For the group having a carbonyl group between carbon atoms of a hydrocarbon group, an example of the hydrocarbon group is C2-C8 C₂₋₈-alkylene. The alkylene may be linear or branched. Here, the number of carbon atoms of the alkylene is the number of carbon atoms excluding the carbon atoms constituting the carbonyl group. The haloformyl group is represented by -C(=O)-X (wherein X is halogen). Examples of the halogen include F and Cl. Preferred among these is F. The haloformyl group is preferably a fluoroformyl group (also referred to as a carbonyl fluoride group). The alkoxy group of the alkoxycarbonyl group may be linear or branched. In particular, C₁₋₈-alkoxy is preferred. Methoxy or ethoxy is particularly preferred.

The number of functional groups in the fluororesin is preferably 1-60000, more preferably 10-50000, still more preferably 30-10000, particularly preferably 50-5000 per 1 × 10⁶ main chain carbon atoms of the fluororesin. When the number of functional groups is not smaller than the lower limit of the above range, the fluororesin has significantly high compatibility with the liquid crystal polymer. When the number of functional groups is not greater than the upper limit of the above range, the fluororesin has excellent compatibility during melt kneading. The number of functional groups is determined by compression-molding a cut piece of a pellet at room temperature to form a film having a thickness of 50-200 µm and analyzing this film by infrared absorption spectrometry.

The fluororesin preferably has a melting point of 100-325°C, more preferably 160-320°C, still more preferably 180-320°C. The melting point herein is the temperature corresponding to the maximum value on a heat-of-fusion curve drawn by increasing the temperature at a rate of 10°C/min using a differential scanning calorimeter (DSC).

The fluororesin preferably has a melt flow rate (MFR) of ≥ 10 g/10 min, more preferably ≥ 20 g/10 min, while preferably ≤ 200 g/10 min, more preferably ≤ 100 g/10 min.

The MFR of the fluororesin is a value obtained as the mass (g/10 min) of a polymer that flows out of a nozzle having an inner diameter of 2.095 mm and a length of 8 mm per 10 minutes at a predetermined measurement temperature (e.g., 372°C for PFA and FEP to be described later, 297°C for ETFE) and load (e.g., 5 kg for PFA, FEP, and ETFE) in accordance with the type of the fluoropolymer using a melt indexer in conformity with ASTM D1238.

Examples of the fluororesin include a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, an Et/CTFE copolymer, polyvinyl fluoride (PVF), and polyvinylidene fluoride (PVDF).

The PAVE is preferably a monomer of the formula:

CF₂=CF-ORf¹ (1)

wherein Rf¹ is C₁₋₈-perfluoroalkyl. Specific examples of the PAVE include perfluoro(methyl vinyl ether) (PMVE), perfluoro(ethyl vinyl ether) (PEVE), perfluoro(propyl vinyl ether) (PPVE), and perfluoro(butyl vinyl ether).

In particular, the fluororesin preferably includes at least one selected from PFA, FEP, and ETFE, more preferably at least one selected from PFA and FEP, and is still more preferably PFA. The fluororesin is also preferably a perfluororesin.

The PFA and FEP are not limited. The mole ratio of a TFE component is preferably 70-99, more preferably 80-98.9. Too small an amount of the TFE unit tends to cause reduced mechanical properties. Too large an amount thereof tends to cause too high a melting point and reduced moldability.

The PFA is preferably a copolymer having a mole ratio of a TFE unit to a PAVE unit (TFE unit/PAVE unit) of (70/30) to < (99/1), more preferably (70/30)-(98.9/1.1). Too small an amount of the TFE unit tends to cause reduced mechanical properties. Too large an amount thereof tends to cause too high a melting point and reduced moldability. A monomer other than TFE and PAVE may be copolymerized as long as it does not impair the effects of the invention.

The PFA preferably has a melting point of 180°C to< 324°C, more preferably 230-320°C, still more preferably 280-320°C.

The FEP is preferably a copolymer having a mole ratio of a TFE unit to a HFP unit (TFE unit/HFP unit) of (70/30) to< (99/1), more preferably (70/30)-(98.9/1.1). Too small an amount of the TFE unit tends to cause reduced mechanical properties. Too large an amount thereof tends to cause too high a melting point and reduced moldability. A monomer other than TFE and HFP may be copolymerized as long as it does not impair the effects of the invention.

The FEP preferably has a melting point of 150°C to < 324°C, more preferably 200-320°C, still more preferably 240-320°C.

The ETFE is preferably a copolymer having a mole ratio of a TFE unit to an ethylene unit (TFE unit/ethylene unit) of (20/80)-(90/10). The mole ratio is more preferably (37/63)-(85/15). A monomer other than TFE and ethylene may be copolymerized as long as it does not impair the effects of the invention.

The ETFE preferably has a melting point of 140°C to < 324°C, more preferably 160-320°C, still more preferably 195-320°C.

The amounts of the respective monomer units of the aforementioned copolymers each can be calculated by any appropriate combination of NMR, FT-IR, elemental analysis, and X-ray fluorescence analysis in accordance with the types of the monomers.

To decrease relative permittivity, the present composition preferably contains the fluororesin in an amount of 10-50 vol.%. The amount is more preferably ≥ 15 vol.%, still more preferably ≥ 20 vol.%, particularly preferably ≥ 24 vol.%. To improve moldability, the amount is more preferably ≤ 45 vol.%, still more preferably ≤ 40 vol.%, particularly preferably ≤ 36 vol.%.

The fluorine-free resin includes at least one selected from a liquid crystal polymer, a polyarylene sulfide, and an aromatic polyether ketone.

The liquid crystal polymer is not limited, but is preferably a thermotropic liquid crystal polymer that becomes a liquid crystal state such as a nematic state when heated. Examples thereof include:
type-I liquid crystal polymers (e.g., a biphenol/benzoic acid/para-hydroxybenzoic acid (POB) copolymer);
type-II liquid crystal polymers (e.g., a hydroxynaphthoic acid (HNA)/POB copolymer); and
type-III liquid crystal polymers (e.g., a POB/ethylene terephthalate copolymer). In particular, the liquid crystal polymer preferably includes at least one selected from type-II liquid crystal polymers such as hydroxynaphthoic acid (HNA)/POB copolymers and type-III liquid crystal polymers such as POB/ethylene terephthalate copolymers in terms of the kneading temperature and the liquid crystal transition temperature.

The liquid crystal transition starting temperature of the liquid crystal polymer is preferably, but is not limited to, a temperature not higher than the processing temperature of the fluororesin. For example, since the processing temperature of PFA is ≥ 320°C, the liquid crystal transition starting temperature is preferably ≤ 300°C, more preferably 200-300°C, still more preferably 220-290°C. The liquid crystal polymer with a liquid crystal transition starting temperature of < 200°C tends to decompose at a kneading temperature to reduce the dispersion effect. The liquid crystal polymer with a liquid crystal transition starting temperature of > 300°C tends to increase the melt viscosity at a kneading temperature, failing to achieve an effect of improving the fluidity. The liquid crystal starting temperature herein means a temperature at which a liquid crystal polymer mounted on the sample holder of a polarization microscope becomes opalescent when heated under shear stress.

An example of the polyarylene sulfide (PAS) is a resin containing a polymer that has a repeating unit of the formula: 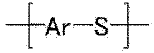 wherein Ar is arylene. The proportion of the repeating unit contained in the resin is preferably ≥ 70 mol%.

Examples of the arylene group for Ar include p-phenylene, m-phenylene, o-phenylene, alkyl-substituted phenylene, phenyl-substituted phenylene, halogen-substituted phenylene, amino-substituted phenylene, amide-substituted phenylene, p,p'-diphenylene sulfone, p,p'-biphenylene, and p,p'-biphenylene ether.

The PAS is not limited. An example thereof is polyphenylene sulfide (PPS).

The PAS preferably has a melt flow rate (MFR) of 30-400 g/10 min, more preferably 40-300 g/10 min, still more preferably 60-200 g/10 min as measured at 295°C at a load of 5 kg. A MFR within the above range allows the resulting resin composition to have further excellent moldability. The MFR of the PAS is measured using a melt indexer in conformity with ASTM D 1238.

The aromatic polyether ketone may be any one containing a repeating unit having an arylene group, an ether group (-O-), and a carbonyl group (-C(=O)-). For example, it contains a repeating unit represented by any of the following formulas (a1)-(a5):

[-Ar¹-O-Ar¹-C(=O)-] (a1);

[-Ar¹-O-Ar¹-C(=O)-Ar¹-C(=O)-] (a2);

[-Ar¹-O-Ar¹-O-Ar¹-C(=O)-] (a3);

[-Ar¹-O-Ar¹-C(=O)-Ar¹-O-Ar¹-C(=O)-Ar¹-C(=O)-] (a4);

and

[-Ar¹-O-Ar¹-O-Ar¹-C(=O)-Ar¹-C(=O)-] (a5),

wherein Ar¹ is an optionally substituted divalent aromatic hydrocarbon ring group.

Examples of the divalent aromatic hydrocarbon ring group for Ar¹ include: C₆₋₁₀-arylene such as a phenylene (e.g., o-, m-, or p-phenylene) and naphthylene; biarylene (each arylene group has a carbon number of 6-10) such as biphenylene (e.g., 2,2'-biphenylene, 3,3'-biphenylene, or 4,4'-biphenylene); and terarylene (each arylene group has a carbon number of 6-10) such as o-, m-, or p-terphenylene. These aromatic hydrocarbon ring groups may have any substituent such as halogen, alkyl (e.g., linear or branched C₁₋₄-alkyl such as methyl), haloalkyl, hydroxy, alkoxy (e.g., linear or branched C₁₋₄-alkoxy such as methoxy), mercapto, alkylthio, carboxyl, sulfo, amino, N-substituted amino, or cyano. In the repeating units (a1)-(a5), Ar¹ groups may be the same as or different from each other. Ar¹ is preferably phenylene (e.g., p-phenylene) or biphenylene (e.g., 4,4'-biphenylene).

An example of a resin having the repeating unit (a1) is polyetherketone (e.g., "PEEK-HT" available from Victrex). An example of a resin having the repeating unit (a2) is polyetherketoneketone (e.g., "PEKK" available from Arkema + Oxford Performance Materials). Examples of a resin having the repeating unit (a3) include polyetheretherketone (e.g., "VICTREX PEEK" available from Victrex; "Vestakeep^{®}" available from Evonik; "Vestakeep-J" available from Daicel-Evonik; "KetaSpire^{®}" available from Solvay Specialty Polymers), and polyether-diphenyl-ether-phenyl-ketone-phenyl (e.g., "Kadel^{®}" available from Solvay Specialty Polymers). An example of a resin having the repeating unit (a4) is polyetherketoneetherketoneketone (e.g., "VICTREX ST" available from Victrex). An example of a resin having the repeating unit (a5) is polyetheretherketoneketone. In the repeating unit having an arylene group, an ether group, and a carbonyl group, the ratio (E/K) of an ether segment (E) to a ketone segment (K) is, for example, 0.5-3, preferably about 1-2.5. The ether segment imparts flexibility to the molecule chain and the ketone segment imparts stiffness to the molecule chain. Thus, the larger the amount of the ether segment is, the higher the crystallization speed is and the higher the crystallinity to be finally achieved tends to be, while the larger the amount of the ketone segment is, the higher the glass transition temperature and the melting point tend to be. These aromatic polyether ketones may be used alone or in combination of two or more.

Preferred among these aromatic polyether ketones are aromatic polyether ketones having any of the repeating units (a1)-(a4). For example, the aromatic polyether ketone is preferably at least one resin selected from polyetherketone, polyetheretherketone, polyetherketoneketone, and polyetherketoneetherketoneketone, more preferably at least one resin selected from polyetherketone, polyetheretherketone, and polyetherketoneketone, still more preferably polyetheretherketone.

The aromatic polyether ketone preferably has a melt flow rate (MFR) of 10-300 g/10 min, more preferably 30-200 g/10 min, still more preferably 50-150 g/10 min as measured at 380°C and a load of 5 kg. A MFR within the range allows the resulting resin composition to have further excellent moldability. The MFR of the aromatic polyether ketone is determined using a melt indexer in conformity with ASTM D1238.

To improve moldability and thermal conductivity, the present composition preferably contains the fluorine-free resin in an amount of 10-50 vol.%. The amount is more preferably ≥ 12 vol.%, still more preferably ≥ 14 vol.%, particularly preferably ≥ 16 vol.%.

The amount is more preferably ≤ 40 vol.%, still more preferably ≤ 38 vol.%, further preferably ≤ 35 vol.%, particularly preferably ≤ 30 vol.%.

The particulate boron nitride contained in the present composition is preferably particulate hexagonal boron nitride (hBN). When containing particulate boron nitride, the present composition can have improved heat dissipation. The heat dissipation as used herein is evaluated based on the thermal conductivity of the resin composition.

The particulate boron nitride contained in the present composition preferably has a 50% particle size (D50) of ≤ 30 µm, more preferably ≤ 20 µm. The 50% particle size is also preferably ≥ 3 µm, more preferably ≥ 5 µm. Controlling the 50% particle size of the particulate boron nitride contained in the present composition within the above range allows the MFR of the resin composition to fall within the range described later, whereby the resin composition has excellent injection moldability. Further, relatively large particles occupy a small proportion in this case, which enables stress dispersion and allows the resin composition of the disclosure to have a high tensile strain at break and also to have improved toughness.

The 50% particle size can be determined from the particle size distribution determined using a laser diffraction particle size distribution analyzer.

The particulate boron nitride contained in the present composition preferably has a 90% particle size (D90) of ≤ 150 µm, more preferably ≤ 130 µm, still more preferably ≤ 100 µm, while preferably ≥ 30 µm, more preferably ≥ 40 µm, still more preferably ≥ 50 µm. This allows the present composition to have both heat dissipation and moldability at a much higher level. The 90% particle size can be determined from the particle size distribution determined using a laser diffraction particle size distribution analyzer.

The particulate boron nitride contained in the present composition has a kurtosis of ≤ 0. This allows the resin composition to have both heat dissipation and moldability at a much higher level. The kurtosis is positive when the distribution is more peaked than the normal distribution, while it is negative when the distribution is flatter than the normal distribution. The normal distribution has a kurtosis of 0. The kurtosis is preferably -0.1 or lower, more preferably -0.3 or lower.

The kurtosis can be determined from the particle size distribution measured using a laser diffraction particle size distribution analyzer. Specifically, the kurtosis can be calculated from the following equation. $\left\{\frac{n \left(n+1\right)}{\left(n-1\right) \left(n-2\right) \left(n-3\right)}\sum {\left(\frac{\left({χ}_{i}-\overline{χ}\right)}{s}\right)}^{4}\right\} - \frac{3 {\left(n-1\right)}^{2}}{\left(n-2\right) \left(n-3\right)}$ (wherein *n* is the number of particle size data sets, *s* is the standard Deviation of the particle size, *χᵢ* is the individual particle size data value, and *χ̅* is the arithmetic mean of the particle size)

The particulate boron nitride contained in the present composition is preferably substantially free from particles having a particle size of ≥ 500 µm, more preferably substantially free from particles having a particle size of ≥ 300 µm. This allows the resin composition to have both heat dissipation and moldability at a much higher level. That the particulate boron nitride is substantially free from particles having a particle size within the above range means that particles having a particle size within the above range in the particle size distribution determined using a laser diffraction particle size distribution analyzer occupy ≤ 0.1%.

The particle size distribution of the particulate boron nitride as used herein is measured using a laser diffraction particle size distribution analyzer (e.g., laser diffraction particle size distribution analyzer Mastersizer 3000 + Hydro R, available from Malvern Panalytical Ltd.) under the following conditions.

### (Measurement conditions)

Solvent: ethanol
Solvent amount: 45 ml
Stirring conditions: 3000 rpm
Laser scattering intensity: 10-20%

In the case where the particle size distributions of the particulate boron nitride in the resin composition of the disclosure are within the aforementioned respective ranges, the particulate boron nitride is allowed to be present densely in the resin composition and can therefore reduce an increase in the melt viscosity. The presence of a reasonably large particulate boron nitride leads to excellent heat conduction. This results in a resin composition having excellent heat dissipation and maintaining the fluidity (excellent moldability).

In particular, the particulate boron nitride preferably has a D50 of ≤ 30 µm and a kurtosis of ≤ 0, more preferably a D50 of ≤ 20 µm and a kurtosis of -0.1 or lower.

Herein, the particle size distributions of the particulate boron nitride in the resin composition may be those determined for particulate boron nitride residues obtained by incinerating the resin composition.

To achieve both heat dissipation and moldability at a much higher level, the present composition contains the particulate boron nitride in an amount of 30-65 vol.%. The amount is preferably 35 vol.% or more, more preferably 38 vol.% or more, still more preferably 40 vol.% or more. The amount is preferably 60 vol.% or less. The amount may be 55 vol.% or less and may be 50 vol.% or less. The resin composition of the disclosure has excellent moldability although it contains a relatively large amount of particulate boron nitride as described above.

The present composition may contain different components in addition to the fluororesin, the fluorine-free resin, and the particulate boron nitride. Examples of the different components include reinforcing fibers, fillers, plasticizers, processing aids, mold lubricants, pigments, flame retarders, lubricants, light stabilizers, weathering agents, conducting agents, antistatic agents, ultraviolet absorbers, antioxidants, foaming agents, perfumes, oils, softeners, dehydrofluorinating agents, and nucleating agents. Examples of the reinforcing fibers include carbon fibers, glass fibers, and basalt fibers. Examples of the fillers include polytetrafluoroethylene, mica, silica, talc, cerite, clay, titanium oxide, and barium sulfate. An example of the conducting agents is carbon black. Examples of the plasticizers include dioctyl phthalic acid and pentaerythritol. Examples of the processing aids include carnauba wax, sulfone compounds, low molecular weight polyethylene, and fluorine-based aids. Examples of the dehydrofluorinating agents include organic oniums and amidines.

The present composition preferably has a thermal conductivity of ≥ 1.0 W/m·K, more preferably ≥ 1.3 W/m·K, still more preferably ≥ 1.5 W/m·K, further preferably ≥ 2.0 W/m·K, particularly preferably ≥ 2.3 W/m·K. A thermal conductivity within the above range allows the resin composition to have better heat dissipation.

The thermal conductivity can be calculated as the product of the thermal diffusivity, the specific heat capacity, and the density measured by the following methods.

### (Thermal diffusivity)

Device: ai-Phase Mobile 1 available from ai-Phase Co., Ltd.
Measurement temperature: 25°C
   Sample: a 0.5-mmt plate obtained by press-molding
   Measurement is performed with N = 3 and the average thereof is used.

### Conditions for press-molding a sample

Device: heat press IMC-11FA available from Imoto Machinery Co., Ltd.
Molding temperature: 360°C
   Pressure: 10 MPa
   Press duration: 2 min

### (Specific heat capacity)

The specific heat capacity is measured in conformity with JIS K 7123, and the value at 25°C is used.

### (Density)

The measurement is performed in conformity with JIS Z 8807.

The resin composition preferably has a melt flow rate (MFR) of ≥ 1 g/10 min. A MFR within the above range allows the resin composition to have excellent moldability. In particular, the resin composition is allowed to have moldability that enables injection molding. The MFR of the resin composition of the disclosure is preferably ≥ 2 g/10 min, more preferably ≥ 3 g/10 min, while preferably ≤ 100 g/10 min or lower, more preferably ≤ 70 g/10 min, still more preferably ≤ 50 g/10 min. The MFR of the resin composition of the disclosure is a value determined using a die having a diameter of 2.095 mm and a length of 8 mm at a load of 5 kg and 372°C in conformity with ASTM D-1238.

The present composition preferably has a relative permittivity of ≤ 3.6. The resin composition having a relative permittivity within the above range can be suitably used in applications that require low dielectric properties. The relative permittivity of the present composition is more preferably ≤ 3.5, still more preferably ≤ 3.4, particularly preferably ≤ 3.3. The lower limit of the relative permittivity is not limited, but is preferably ≥ 2.5, more preferably ≥ 2.6, still more preferably ≥ 2.7. The relative permittivity of the present composition is measured in conformity with ASTM D 150 at 6 GHz and 25°C using a cavity resonator permittivity measurement device (available from Agilent Technologies, Inc.).

The present composition is preferably one capable of providing a specimen in conformity with ASTM D790 by injection molding at a cylinder temperature of 370°C and a mold temperature of 180°C using a 15-t injection molding machine. Such a resin composition can have further excellent injection moldability. The 15-t injection molding machine may be, for example, M26/15B available from Sumitomo Heavy Industries, Ltd.

The present composition may have any form, such as powder, granules, or pellets. The resin composition preferably in the form of pellets because pellets are easy to use in injection molding.

The present composition may be produced by, for example, mixing the fluororesin, the fluorine-free resin, and the particulate boron nitride, as well as a different component, if necessary. The mixing may be performed using a single-screw or twin-screw extruder.

In order to achieve both heat dissipation and moldability at a much higher level, the present composition is preferably obtainable by melt-kneading.

In the case of producing the present composition by melt-kneading, the particulate boron nitride material used is preferably in the form of agglomerated particles of boron nitride. Melt-kneading this particulate boron nitride material with the fluororesin enables easy control of the MFR of the resulting resin composition to fall within the range described later. Such melt-kneading also enables easy control of the particle size distribution of the particulate boron nitride in the resulting resin composition to fall within the above preferred range. The agglomerated particles are agglomerated primary particles of boron nitride.

The particulate boron nitride material preferably has an aspect ratio (major axis/minor axis) of 1.0-3.0, more preferably 1.0-2.5.

The aspect ratio can be calculated from the major axis and the minor axis measured using a scanning electron microscope (SEM), and the aspect ratio used is an average of the aspect ratios measured for 30 samples.

Specific examples of the particulate boron nitride material include UHP-G1H available from Showa Denko K.K., CF600 available from Momentive, and FS-3 available from Mizushima Ferroalloy Co., Ltd.

The melt-kneading temperature is preferably higher than the melting point of the fluororesin, more preferably a temperature ≥ 5°C higher than the melting point of the fluororesin.

The present composition has excellent heat dissipation as well as excellent moldability and thus can be molded into various shapes for use in the fields requiring heat dissipation, such as the electrical and electronic device field, the automobile field, and the LED field. For example, the resin composition is suitable for electrical/electronic device parts such as connectors, sockets, relay parts, coil bobbins, optical pickups, radiators, printed circuit boards, and computer-related parts. Since the present composition has excellent heat dissipation and low relative permittivity while also having excellent moldability, the resin composition is particularly suitable for printed circuit boards. The resin composition is also applicable to electric wire coating materials, motor parts, motor insulators, LED lamp sockets, and parts for lithium-ion batteries.

The present composition can be molded into a molded article. A molded article containing the resin composition is also one aspect of the disclosure. The method for molding the resin composition is not limited. The resin composition is preferably molded by any of injection molding, extrusion molding, compression molding, cutting, and wire coating extrusion. A method of producing a molded article by the molding method is also one aspect of the disclosure.

The present composition has excellent fluidity and thus can be favorably molded by injection molding. A molded article obtained by injection molding the present composition is a favorable aspect of the disclosure.

The molded article may have any shape such as a sheet, a film, a rod, or a pipe.

### EXAMPLES

The disclosure is specifically described with reference to examples.

The physical properties in the examples and the comparative examples were measured by the following methods.

### MFR of resin composition

The MFR was measured using a melt indexer with a die having a diameter of 2.095 mm and a length of 8 mm in conformity with ASTM D-1238 at 372°C and a load of 5 kg.

### Thermal conductivity

The thermal conductivity was calculated as a product of the thermal diffusivity, the specific heat capacity, and the density measured by the following methods.

### (Thermal diffusivity)

Device: ai-Phase Mobile 1 available from ai-Phase Co., Ltd.
Measurement temperature: 25°C
   Sample: a 0.5-mmt plate obtained by press-molding
   Measurement was performed with N = 3 and the average thereof was used.

### Conditions for press-molding a sample

Device: heat press IMC-11FA available from Imoto Machinery Co., Ltd.
Molding temperature: 360°C
Pressure: 10 MPa
Press duration: 2 min

### (Specific heat capacity)

The specific heat capacity was measured in conformity with JIS K 7123, and the value at 25°C was used.

### (Density)

The density was measured in conformity with JIS Z 8807.

### Injection moldability

The moldability was determined by whether the resin composition was capable of being molded into a specimen in conformity with ASTM D790. Injection molding was performed using a 15-t injection molding machine M26/15B available from Sumitomo Heavy Industries, Ltd., at a cylinder temperature of 370°C and a mold temperature of 180°C.

The cases where the resin was molded into a specimen were evaluated as good. The cases where the resin was not molded into a specimen were evaluated as poor.

### Particle size distribution of particulate boron nitride in resin composition and kurtosis

A nickel crucible was charged with 5 g of pellets of the resin composition. The contents were superheated at 600°C for two hours in an electric muffle furnace (FUW222PA, available from Advantech Toyo Kaisha, Ltd.), so that the resin was incinerated. Thereby, an incineration residue was obtained.

The resulting residue was subjected to measurement with a laser diffraction particle size distribution analyzer (laser diffraction particle size distribution analyzer Mastersizer 3000 + Hydro R, available from Malvern Panalytical Ltd.) under the following conditions. The evaluation was on a volume basis. The measurement was performed with N = 20. After it was confirmed that the particle size distribution was stabilized, the last data was used. The kurtosis was calculated based on the last data of the 20 measurements.

### (Measurement conditions)

Solvent: ethanol
Solvent amount: 45 ml
Stirring conditions: 3000 rpm
Laser scattering intensity: 10-20% (solution concentration 0.01-0.02%)

### Relative permittivity

The relative permittivity was measured in conformity with ASTM D 150 at 6 GHz and 25°C using a cavity resonator permittivity measurement device (Network analyzer system available from Agilent Technologies, Inc.).

### <Measurement method for melt viscosity>

The melt viscosity of the polyether ketone resin was measured in conformity with ASTM D3835 under the conditions of 60 sec⁻¹ and 390°C.

The materials used in examples and comparative examples are as follows.

### (Fluororesin)

PFA: tetrafluoroethylene/perfluoro(alkyl vinyl ether) copolymer, MFR = 70 g/10 min, 230 carbonyl groups/10⁶ carbon atoms, melting point: 311°C

### <Number of carbonyl group-containing functional groups>

White powder of the fluorine-containing copolymer (b) or a piece cut out of a melt-extruded pellet of the fluorine-containing copolymer (b) was compression-molded at room temperature to form a film having a thickness of 50-200 µm. This film was analyzed by infrared absorption spectrometry to measure the absorbance of the peak assigned to a carbonyl group-containing functional group. Then, the number N of carbonyl group-containing functional groups in the polymer forming the fluorine-containing copolymer (b) per 10⁶ main chain carbon atoms was calculated according to the following equation.$N = 500 AW / εdf$
A: absorbance of a peak assigned to a carbonyl group-containing functional group
ε: mole absorbance coefficient of a peak assigned to a carbonyl group-containing functional group
W: average molecular weight of the monomers calculated from the composition of the fluorine-containing copolymer (b)
d: film density (g/cm³)
f: film thickness (mm)

The analysis by infrared absorption spectrometry was performed with Perkin-Elmer FTIR spectrometer (available from Perkin Elmer Japan Co., Ltd.). The film thickness was measured with a micrometer.

### (Fluorine-free resin)

LCP: thermotropic liquid crystal polymer, X7G (type-III liquid crystal polymer, available from Eastman Kodak Company), the amount of paraoxybenzoic acid units copolymerized: 40 mol%, liquid crystal starting temperature: 245°C
PPS: polyphenylene sulfide, MFR 125 g/10 min
PEEK: polyetheretherketone (MFR 38 g/10 min, melt viscosity; 1.19 kNsm⁻²)

### (Boron nitride)

BN1: UHP-G1H available from Showa Denko K.K., aggregated boron nitride particles, average particle size 50 µm BN2: PT110 available from Momentive, flaky boron nitride particles, average particle size 45 µm

### Examples 1-11 and Comparative Examples 1-6

The materials were kneaded in accordance with the formulations shown in Tables 1-3 in a twin extruder at a cylinder temperature of 360°C to prepare fluororesin-containing compositions. The obtained fluororesin-containing compositions were injection-molded in an injection molding machine set at a cylinder temperature of 370°C and a mold temperature of 180°C to mold specimens in conformity with ASTM D790.

**[Table 1]**

| | | | Example 1 | Example 2 | Example 3 | Example 4 | Example 5 |
|---|---|---|---|---|---|---|---|
| Formulation | PFA | vol% | 50 | 20 | 36 | 10 | 20 |
| | LCP | | 20 | 50 | 24 | 40 | 30 |
| | PPS | | | | | | |
| | PEEK | | | | | | |
| | BN1 | | 30 | 30 | 40 | 50 | 50 |
| | BN2 | | | | | | |
| | Total | | 100 | 100 | 100 | 100 | 100 |
| Evaluation | Thermal conductivity | W/m·K | 1.3 | 1.7 | 2.5 | 3.6 | 3.8 |
| | Relative permittivity | - | 2.5 | 2.7 | 3.0 | 3.5 | 3.4 |
| | Injection moldability | - | Good | Good | Good | Good | Good |
| Particulate boron nitride particle size distribution | D50 | (µm) | 8.7 | 18.7 | 11.2 | 18.7 | 14.5 |
| | Kurtosis | | -0.6 | -0.2 | -0.4 | -0.1 | -1.5 |

**[Table 2]**

| | | | Example 6 | Example 7 | Example 8 | Example 9 | Example 10 | Example 11 |
|---|---|---|---|---|---|---|---|---|
| Formulation | PFA | vol% | 30 | 24 | 30 | 24 | 21 | 30 |
| | LCP | | 20 | 16 | | | | |
| | PPS | | | | 20 | 16 | 14 | |
| | PEEK | | | | | | | 20 |
| | BN1 | | 50 | 60 | 50 | 60 | 65 | 50 |
| | BN2 | | | | | | | |
| | Total | | 100 | 100 | 100 | 100 | 100 | 100 |
| Evaluation | Thermal conductivity | W/m·K | 2.9 | 5.0 | 2.6 | 4.2 | 4.5 | 2.7 |
| | Relative permittivity | - | 3.1 | 3.3 | 3.2 | 3.4 | 3.5 | 3.2 |
| | Injection moldability | - | Good | Good | Good | Good | Good | Good |
| Particulate boron nitride particle size distribution | D50 | (µm) | 8.7 | 8.7 | 11.2 | 8.7 | 7.6 | 9.0 |
| | Kurtosis | | 0.0 | -0.5 | -0.8 | -0.8 | -0.6 | -0.4 |

**[Table 3]**

| | | | Comparative Example 1 | Comparative Example 2 | Comparative Example 3 | Comparative Example 4 | Comparative Example 5 | Comparative Example 6 |
|---|---|---|---|---|---|---|---|---|
| Formulation | PFA | vol% | 60 | | 40 | 50 | 50 | |
| | LCP | | 40 | 50 | | | | |
| | PPS | | | | | | | 50 |
| | BN1 | | | 50 | 60 | 50 | | 50 |
| | BN2 | | | | | | 50 | |
| | Total | | 100 | 100 | 100 | 100 | 100 | 100 |
| Evaluation | Thermal conductivity | W/m·K | 0.3 | 3.4 | 2.5 | 1.9 | 2.0 | 2.6 |
| | Relative permittivity | - | 2.8 | 3.7 | 2.7 | 2.6 | 2.6 | 3.9 |
| | Injection moldability | - | Good | Good | Poor | Poor | Poor | Good |
| Particulate boron nitride particle size distribution | D50 | (µm) | - | 27.4 | 4.6 | 4.6 | 21.2 | 7.6 |
| | Kurtosis | | - | -0.1 | 1.9 | 1.8 | 0.7 | -0.6 |

The resin compositions of Examples 1-11 had excellent thermal conductivity (heat dissipation) and moldability, and also had a relative permittivity as low as 3.5 or lower. In contrast, the resin composition of Comparative Example 1, containing no particulate boron nitride, had low thermal conductivity (heat dissipation). The resin compositions of Comparative Examples 2 and 6, containing no fluororesin, had high relative permittivity. The resin compositions of Comparative Examples 3-5, containing no fluorine-free resin such as LCP, had poor injection moldability.

## Claims

1. A composition, which is a resin composition comprising:
- a melt-fabricable fluororesin containing at least one functional group selected from OH and carbonyl group-containing groups;
- at least one fluorine-free resin selected from liquid crystal polymers, polyarylene sulfides and aromatic polyether ketones; and
- 30-65 vol.% of particulate boron nitride, which boron nitride has a kurtosis of ≤ 0, determined according to the method defined in the description.

2. The composition of claim 1, wherein the fluororesin is contained in an amount of 10-50 vol.%.

3. The composition of claim 1 or 2, wherein the fluorine-free resin is contained in an amount of 10-50 vol.%.

4. The composition of any of claims 1-3, wherein the fluororesin has a melting point of 100-325°C, measured as indicated in the description.

5. The composition of any of claims 1-4, wherein the fluororesin includes at least one of a tetrafluoroethylene/perfluoro(alkyl vinyl ether) copolymer and a tetrafluoroethylene/hexafluoropropylene copolymer.

6. The composition of any of claims 1-5, which has a thermal conductivity of ≥ 1.0 W/m.K, measured as indicated in the description.

7. The composition of any of claims 1-6, which has a relative permittivity of ≤ 3. 6, measured as indicated in the description.

8. A molded article comprising the composition of any of claims 1-7.

9. A method for producing a molded article, comprising molding the composition of any of claims 1-7 by any of injection molding, extrusion molding, compression molding, cutting, and wire coating extrusion.

## Patentansprüche

1. Zusammensetzung, bei der es sich um eine Harzzusammensetzung handelt, die Folgendes umfasst:
- ein schmelzverarbeitbares Fluorharz, das mindestens eine funktionelle Gruppe enthält, die aus OH- und Carbonylgruppenhaltigen Gruppen ausgewählt ist;
- mindestens ein fluorfreies Harz, das aus Flüssigkristallpolymeren, Polyarylensulfiden und aromatischen Polyetherketonen ausgewählt ist; und
- 30-65 Vol.-% teilchenförmiges Bornitrid, wobei das Bornitrid eine Kurtosis von ≤ 0 aufweist, bestimmt gemäß dem in der Beschreibung definierten Verfahren.

2. Zusammensetzung nach Anspruch 1, wobei das Fluorharz in einer Menge von 10-50 Vol.-% enthalten ist.

3. Zusammensetzung nach Anspruch 1 oder 2, wobei das fluorfreie Harz in einer Menge von 10-50 Vol.-% enthalten ist.

4. Zusammensetzung nach mindestens einem der Ansprüche 1-3, wobei das Fluorharz einen Schmelzpunkt von 100-325 °C aufweist, gemessen wie in der Beschreibung angegeben.

5. Zusammensetzung nach mindestens einem der Ansprüche 1-4, wobei das Fluorharz mindestens eines aus einem Tetrafluorethylen/Perfluor(alkylvinylether)-Copolymer und einem Tetrafluorethylen/Hexafluorpropylen-Copolymer einschließt.

6. Zusammensetzung nach mindestens einem der Ansprüche 1-5, die eine Wärmeleitfähigkeit von ≥ 1,0 W/m·K aufweist, gemessen wie in der Beschreibung angegeben.

7. Zusammensetzung nach mindestens einem der Ansprüche 1-6, die eine relative Dielektrizitätskonstante von ≤ 3,6 aufweist, gemessen wie in der Beschreibung angegeben.

8. Formteil, das die Zusammensetzung nach mindestens einem der Ansprüche 1-7 umfasst.

9. Verfahren zur Herstellung eines Formteils, umfassend das Formen der Zusammensetzung nach mindestens einem der Ansprüche 1-7 durch Spritzgießen, Extrusionsformen, Formpressen, Schneiden und Drahtbeschichtungsextrusion.

## Revendications

1. Composition, qui est une composition de résine comprenant :
- une fluororésine pouvant être fabriquée à l'état fondu contenant au moins un groupe fonctionnel sélectionné parmi OH et les groupes contenant un groupe carbonyle ;
- au moins une résine exempte de fluor sélectionnée parmi les polymères à cristaux liquides, les polyarylènesulfures et les polyéthercétones aromatiques ; et
- 30-65 % en volume de nitrure de bore particulaire, lequel nitrure de bore présente une kurtosis ≤ 0, déterminée selon le procédé défini dans la description.

2. Composition selon la revendication 1, dans laquelle la fluororésine est contenue en une quantité de 10-50 % en volume.

3. Composition selon la revendication 1 ou la revendication 2, dans laquelle la résine exempte de fluor est contenue en une quantité de 10-50 % en volume.

4. Composition selon l'une quelconque des revendications 1 à 3, dans laquelle la fluororésine présente un point de fusion de 100-325 °C, mesuré comme indiqué dans la description.

5. Composition selon l'une quelconque des revendications 1 à 4, dans laquelle la fluororésine inclut au moins un parmi un copolymère de tétrafluoroéthylène/perfluoro(éther alkylvinylique) et un copolymère de tétrafluoroéthylène/hexafluoropropylène.

6. Composition selon l'une quelconque des revendications 1 à 5, qui présente une conductivité thermique ≥ 1,0 W/m.K, mesurée comme indiqué dans la description.

7. Composition selon l'une quelconque des revendications 1 à 6, qui présente une permittivité relative ≤ 3,6, mesurée comme indiqué dans la description.

8. Article moulé comprenant la composition selon l'une quelconque des revendications 1 à 7.

9. Procédé pour produire un article moulé, comprenant le moulage de la composition selon l'une quelconque des revendications 1 à 7 par l'un quelconque parmi le moulage par injection, le moulage par extrusion, le moulage par compression, la découpe et l'extrusion avec revêtement de fil.
